# EUROPEAN PATENT APPLICATION

(11) **EP 0 917 368 A1**
(43) Date of publication of application: **19.05.1999**
(21) Application number: 98907235.0
(22) Date of filing: 13.03.1998
(51) Int. Cl.: H04N 7/18, H04M 11/00

(54) **TLELECOMMUNICATION SYSTEM**

(30) Priority: 14.03.1997 JP 61261/97
(71) Applicant: Sony Corporation, Tokyo 141-0001 (JP)
(72) Inventor: SUGA, Ryoichi, Shinagawa-ku, Tokyo 141-0001 (JP); SUZUKI, Toshio, Shinagawa-ku, Tokyo 141-0001 (JP); TONOMURA, Masashi, Shinagawa-ku, Tokyo 141-0001 (JP); OKANO, Shoko, Shinagawa-ku, Tokyo 141-0001 (JP)
(74) Representative: Pilch, Adam John Michael
(86) International application number: JP9801083
(87) International publication number: WO9842131

(57) **Abstract**

Each of terminals connected to a center device supplies an information signal to the center device through a B channel of an ISDN. Displays indicative of both shot pictures at the terminals and whether the shot picture corresponds to a shot picture at any terminal, are made to a television monitor of the center device. Upon detection of an abnormal state by another terminal, a connection request signal and an abnormal state discrimination signal are supplied to the center device through a D channel of the ISDN. A terminal that has detected an abnormal state, and the contents of its abnormal state are displayed on the television monitor. A terminal connected to the center device through the B channel is switched to the terminal having detected the abnormal state, automatically or based on a user's operation. The terminal having detected the abnormal state transmits an information signal to the center device. A display indicative of a shot or photographed picture at the terminal having detected the abnormal state, a display indicative of the terminal having detected the abnormal state, and a display of the contents of its abnormal state are made. One center device is capable of performing monitoring by using a plurality of terminals.

## Description

### TECHNICAL FIELD

This invention relates to an information communication system.

### BACKGROUND ART

A system for monitoring the occurrence of abnormal conditions and the like has heretofore been provided with a plurality of sensors and video cameras for respectively detecting abnormal states and has practiced selecting an image-sensed signal of a video camera corresponding to a sensor having detected an abnormal state by a signal switcher when the abnormal state is detected by any sensor and displaying on the screen of a television monitor connected to the signal switcher, an shot or photographed image or picture in a monitor area in which the abnormal state is detected.

There is also known an information communication system wherein terminals are respectively provided at positions away from center devices as shown in Fig. 7 and information signals are respectively obtained from the terminals to perform monitoring. In Fig. 7, terminals 10-1 through 10-m are respectively provided at locations away from center devices 20-1 through 20-j. They are electrically connected to one another by a communication line, e.g., an ISDN (Integrated Services Digital Network) 30.

The terminals 10-1 through 10-m are respectively provided with video cameras for respectively photographing or shooting monitor areas or sensors for respectively detecting abnormal states. The center devices 20-l through 20-j are respectively provided with television monitors for respectively displaying images or pictures.

In the information communication system constructed in this way, the terminals are respectively registered with telephone numbers of the center devices 20-l through 20-j. When a sensor has detected an abnormal state, one of the plurality of center devices is called up in preset order and a shot image at a terminal is displayed on its corresponding television monitor of the connected center device. Further, the terminals are registered with representative or key telephone numbers of the center devices 20-l through 20-j. When an abnormal state is detected, the corresponding key telephone number is dialed. When the terminal is connected to any center device, a shot image at the terminal is displayed on the television monitor of the connected center device.

Meanwhile, the information communication system of such a type that when each of the television monitors is connected to the signal switcher as described above and the image-sensed signal of the video camera is switched to another when the abnormal state is detected, whereby the shot picture in the monitor area in which the abnormal state has detected, is displayed on the television monitor, will impose restrictions on the distances at which the video cameras and the television monitors or the like can be placed away from each other, due to the fact that the video cameras, the signal switchers and the television monitors are connected to one another by using cables.

When the terminals are respectively provided at the positions away from the center devices by use of the ISDN or the like and registered with the telephone numbers and the key telephone numbers of the plurality of center devices in advance, a large number of center devices or center devices equal in number to the terminals are needed to allow the terminals to be connected to the center devices at all times, so that the cost of the system will be very high. Since a plurality of ISDN lines are required to connect a plurality of center devices and terminals to one another and the respective center devices need to place users for respectively monitoring displayed shot pictures therein, the system will increase not only in price but also in operation cost.

Therefore, the present invention provides an information communication system and a communication control device both capable of performing communications as to information signals so as to process them at low cost and with efficiency.

### DISCLOSURE OF THE INVENTION

The information communication system according to the present invention performs communications as to information signals between a plurality of terminals and a center device through a communication line having a first channel and a second channel. Each of the terminals includes information signal generating means for generating each information signal, connection request signal generating means for generating a signal for making a request for connection to the center device, and signal transmitting means capable of transmitting the information signal through the first channel and transmitting the connection request signal through the second channel. The center device includes receiving means for receiving therein the information signal transmitted via the first channel from the signal transmitting means in one of the plurality of terminals and the connection request signal transmitted via the second channel from the signal transmitting means in one of the plurality of terminals, first monitor information generating means for generating first monitor information confirmable by a user, based on the information signal being now received by the receiving means through the first channel, second monitor information generating means for generating second monitor information indicative of a terminal having transmitted the connection request signal and confirmable by the user, according to the connection request signal received by the receiving means through the second channel, information output means for outputting the first monitor information and the second monitor information, switching control signal generating means for generating a switching control signal for switching a terminal connected via the first channel to another terminal, and switching control signal transmitting means for transmitting the switching control signal through the second channel.

The communication control device is connected to one of a plurality of terminals through a communication line having a first channel and a second channel and performs communications as to information signals with the connected terminal. The communication control device comprises receiving means for receiving the information signal sent through the first channel from one of the plurality of terminals and receiving the connection request signal sent through the second channel from one of the plurality of terminals, first monitor information generating means for generating first monitor information confirmable by a user, based on an information signal being now received by the receiving means through the first channel, second monitor information generating means for generating second monitor information indicative of a terminal having transmitted the connection request signal and confirmable by the user, according to the connection request signal received by the receiving means through the second channel, information output means for outputting the first monitor information and the second monitor information, switching control signal generating means for generating a switching control signal for switching a terminal connected via the first channel to another terminal, and switching control signal transmitting means for transmitting the switching control signal through the second channel.

In the present invention, when an abnormal state is detected by abnormal state detecting means of any of a plurality of terminals, the terminal having detected the abnormal state transmits a connection request signal to a center device through a second channel of a communication line. In the center device, display means makes a display indicative of the terminal having detected the abnormal state, based on the connection request signal. The center device provides a line connection to the terminal having detected the abnormal state and transmitted the connection request signal, through a first channel, based on a trigger signal generated by trigger signal generating means according to a user's operation, or automatically. The terminal, which has detected the abnormal state, transmits an information signal to the center device through a first channel. In the center device, a picture is displayed on display means based on the information signal sent from the terminal having detected the abnormal state.

Thus, even when the plurality of terminals are provided at the positions away from the center device, the center device can easily detect based on the connection request signal through the second channel, in which terminal the abnormal state occurs. Further, the connection of the center device to the terminal having detected the occurrence of the abnormal state through the first channel allows easy confirmation of abnormal conditions, whereby monitoring can be done with efficiency.

### BRIEF DESCRIPTION OF THE DRAWINGS

FIG. 1 is a diagram showing a configuration of an information communication system according to the present invention;
Fig. 2 is a diagram illustrating a configuration of a terminal;
Fig. 3 is a diagram depicting a configuration of a center device;
Fig. 4 is a diagram for describing the operation of the information communication system according to the present invention;
Fig. 5 is a diagram for explaining another operation of the information communication system according to the present invention;
Fig. 6 is a flowchart showing the operation of a communication controller; and
Fig. 7 is a diagram illustrating a configuration of a conventional information communication system.

### BEST MODE FOR CARRYING OUT THE INVENTION

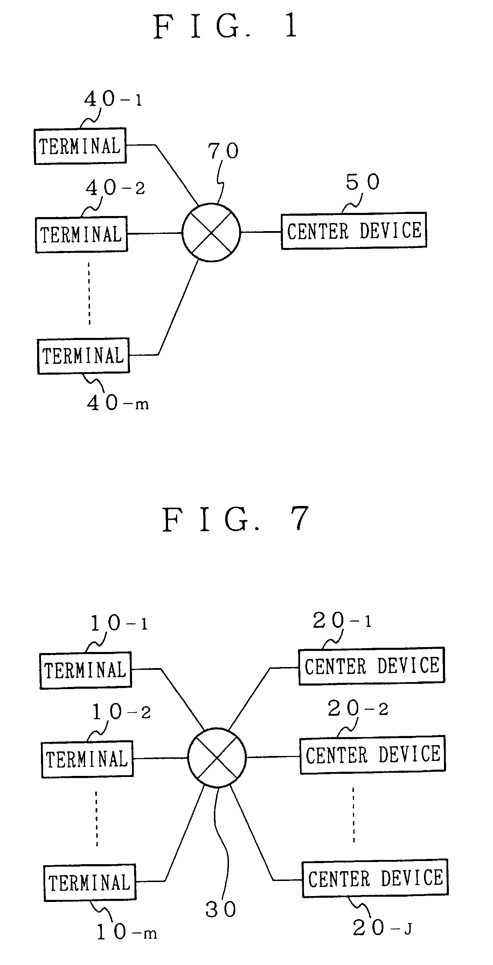

The present invention will next be described in detail using the drawings. Fig. 1 shows a configuration of an information communication system. The information communication system is configured by connecting a plurality of terminals 40-1 through 40-m to one center equipment or device 50 through an ISDN 70 using a switched network having a circuit switching function and a packet switching function.

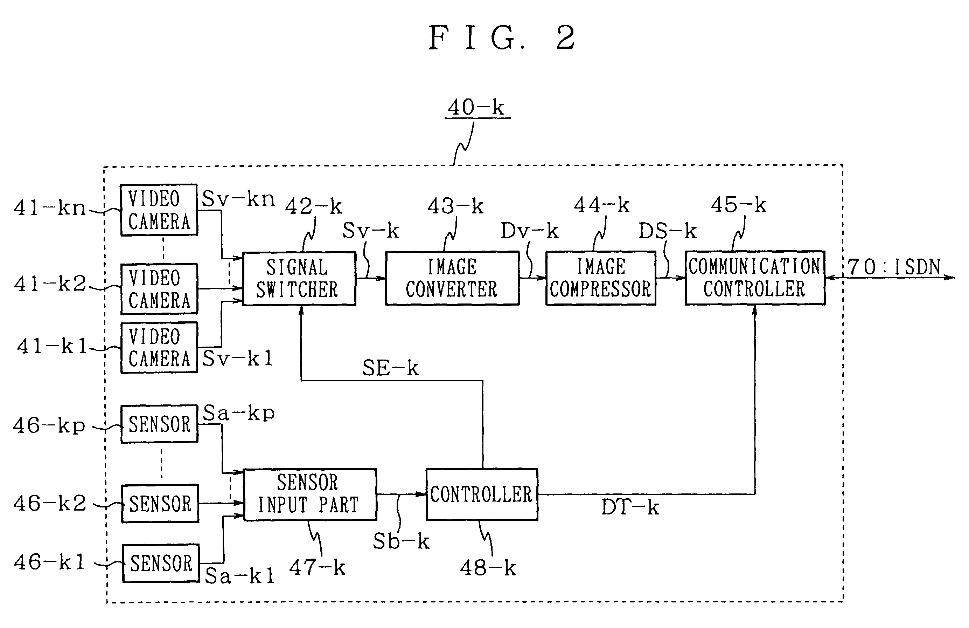

The terminal 40-k (1≦k≦m) will be defined as a configuration shown in Fig. 2. A plurality of video cameras 41-k1 through 41-kn of the terminal 40-k always shoots monitoring or supervisory regions or areas. Analog image-sensed signals Sv-k1 through Sv-kn obtained from the video cameras 41-k1 through 41-kn are supplied to a signal switcher 42-k.

The signal switcher 42-k selects one image-sensed signal from the image-sensed signals Sv-k1 through Sv-kn, based on a switching control signal SE-k supplied from a controller 48-k to be described later and supplies it to an image converter 43-k. The image converter 43-k transforms the image-sensed signal Sv-k selected by the signal switcher 42-k into a digital image signal Dv-k and supplies it to an image compressor 44-k.

The image compressor 44-k performs an amount-of-data compressing process on the image signal Dv-k by utilizing, for example, compensation for motion, variable-length coding, etc. in combination. Further, the image compressor 44-k adds error correction data to the image signal Dv-k whose amount of data is compressed, to thereby generate an information signal DS-k, and supplies it to a communication controller 45-k.

Sensors 46-k1 through 46-kp of the terminal 40-k are constructed by using a crime-preventive sensor for detecting a person's invasion, etc., a fire sensor for sensing heat, smoke, etc., a gas sensor for detecting the leakage of gas, etc., for example. When the respective sensors 46-k1 through 46-kp are associated with the respective video cameras 41-k1 through 41-kn and an abnormal state or abnormal condition is detected by any sensor 46-k in this condition, the state of the abnormal state can be confirmed by using the image-sensed signal obtained from the corresponding video camera 41-k. Sensor signals Sa-k1 through Sa-kp outputted from the sensors 46-k1 through 46-kp are supplied to a sensor input unit or part 47-k.

The sensor input part 47-k detects an abnormal state or abnormal condition, based on the sensor signals Sa-k1 through Sa-kp produced from the sensors 46-k1 through 46-kp. When the abnormal condition or abnormal state is now detected by any of the sensors 46-k1 through 46-kp, the sensor input part 47-k supplies a detected signal Sb-k indicative of the corresponding sensor which has detected the abnormal state, to the controller 48-k.

The controller 48-k can detect the abnormal condition or abnormal state, e.g., invaders, fires or gas leakage, etc. according to the detected signal Sb-k. When the abnormal state is detected by the controller 48-k, the controller 48-k generates a switching control signal SE-k to select an image-sensed signal to be obtained from a video camera corresponding to the corresponding sensor given by the detected signal Sb-k and supplies it to the signal switcher 42-k. Further, the controller 48-k produces a signal DT-k indicative of a request for connection between the terminal 40-k and the center device 50 or the contents of the abnormal condition and supplies it to the communication controller 45-k.

The communication controller 45-k generates a connection request signal SUC for making a request for connection to the center device 50, based on the signal DT-k supplied from the controller 48-k and outputs it to an ISDN 70. Further, the communication controller 45-k generates a response signal CNC-k corresponding to a connection request signal SUR-k supplied from the center device 50 and outputs it to the ISDN 70. Moreover, the communication controller 45-k generates an abnormal state discrimination signal DR-k indicative of the contents of an abnormal condition or abnormal state, based on the signal DT-k supplied from the controller 48-k and outputs it to the ISDN 70. When the terminal 40-k and the center device 50 are connected to each other by circuit or line switching, based on the connection request signal SUC, the communication controller 45-k sends the information signal DS-k supplied from the image compressor 44-k to the center device 50 through the ISDN 70.

The ISDN 70 comprises two B channels whose transmission rate is 64 kbps and a D channel whose transmission rate is 16 kbps. The connection request signals SUC and SUR-k, the response signal CNC-k and the abnormal state discrimination signal DR-k, etc. are transmitted as a packet through the D channel. Further, the information signal DS-k is transmitted through the B channels according to the circuit switching.

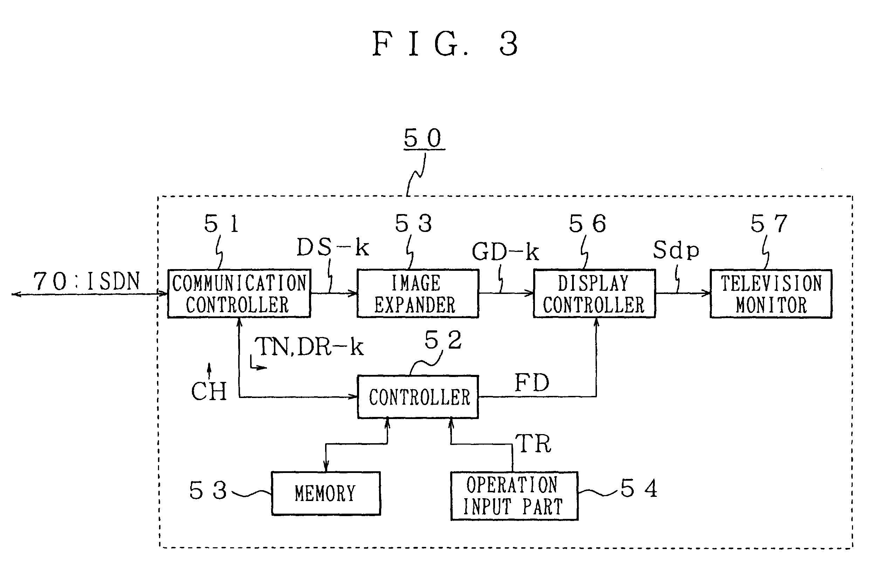

The configuration of the center device 50 will next be described using Fig. 3. A communication controller 51 of the center device 50 is electrically connected to the ISDN 70. The connection request signal SUC-k and abnormal state discrimination signal DR-k transmitted from the terminal 40-k are supplied to the communication controller 51.

The communication controller 51 generates a response signal CNR-k corresponding to the connection request signal SUC-k and sends it to the ISDN 70. Thus, a circuit or line connection is done through a B channel according to the request made from the terminal 40-k. Further, the communication controller 51 produces a connection request signal SUR-k for call the terminal 40-k and sends it to the ISDN 70. As a result, a line connection to the terminal 40-k is performed according to the request made from the center device 50. Moreover, the communication controller 51 generates and sends a cut-off signal CC for cutting off or disconnecting a B channel line and thereafter produces and sends a connection request signal for calling another terminal. As a result, line switching is made through the B channel. Incidentally, the line switching is automatically done based on a control signal CH outputted from a controller 52 to be described later or when a predetermined operation is done.

The communication controller 51 supplies a connection information signal TN indicative of, for example, whether the center device 50 is line-connected through the B channel, whether the connection request signal SUC is sent from any terminal to the center device 50, and the like, to the controller 52. Further, when an abnormal state discrimination signal DR-k is supplied from the terminal 40-k through the D channel, the communication controller 51 supplies the abnormal state discrimination signal DR-k to the controller 52. When an information signal DS-k is supplied from the terminal 40-k through the B channel, the communication controller 51 supplies the information signal DS-k to an image expander 55.

A memory 53, which stores therein a character signal, for example, and an operation input part 54 for generating a trigger signal TR according to the operation made by a user are electrically connected to the controller 52. In order to make a display indicative of whether the B channel is connected to any terminal, a display indicative of the contents of an abnormal state, based on the abnormal state discrimination signal DR-k, a display indicative of a terminal which has transmitted the abnormal state discrimination signal DR-k, etc., the controller 52 reads out the character signal CS form the memory 53 and supplies it to a display controller 56. Further, the controller 52 generates a control signal CH when the abnormal state discrimination signal DR-k is supplied thereto, or based on the trigger signal TR generated from the operation input part 54. The controller 52 supplies the control signal CH to the communication controller 51. As a result, the line switching to the B channel is made, whereby the terminal connected to the center device 50 is switched to the terminal which has sent the abnormal state discrimination signal DR-k.

The image expander 55 performs an error correcting process and a data expanding process on the information signal DS-k to thereby generate an image signal GD-k and supplies the resultant image signal GD-k to the display controller 56.

The display controller 56 generates a display signal Sdp, based on the character signal CS outputted from the controller 52 and the image signal GD-k outputted from the image expander 55 and supplies it to a television monitor 57.

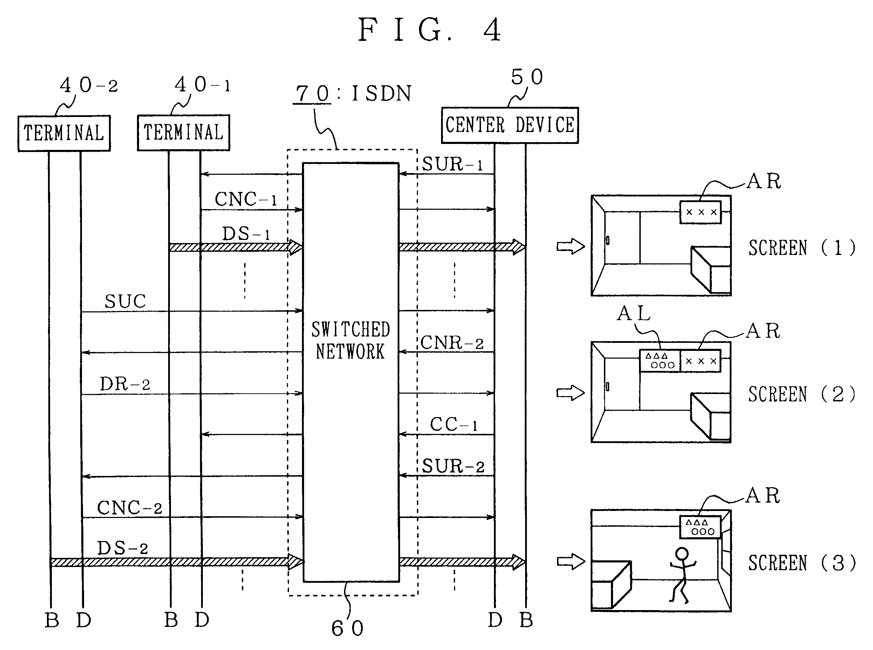

The operation will next be described. Fig. 4 shows the operation of an information communication system for performing communications between two terminals 40-1 and 40-2 and the center device 50 through the ISDN 70, for example. Incidentally, the ISDN 70 has a switched network 75 for performing line switching through a B channel and performing packet switching through a D channel.

When the center device 50 calls up the terminal 40-1 to confirm the state of a monitoring or supervisory region or area, the center device 50 generates a connection request signal SUR-1 for calling or invoking the terminal 40-1 and supplies the connection request signal SUR-1 to the terminal 40-1 through the D channel of the ISDN 70 as a packet.

A communication controller 45-1 of the terminal 40-1 generates a response signal CNC-1 capable of providing a line connection for the B channel in response to the connection request signal SUR-1 and sends the response signal CNC-1 to the D channel. Now, the terminal 40-1 and the center device 50 are line-connected to each other through the B channel of the ISDN 70. Further, the communication controller 51 of the center device 50 supplies a connection information signal TN indicative of the execution of a line connection with the terminal 40-1 through the B channel to the controller 52.

When the terminal 40-1 and the center device 50 are line-connected through the B channel, the communication controller 45-1 of the terminal 40-1 transmits an information signal DS-1 to the center device 50 through the B channel. The center device 50 electrically processes the supplied information signal DS-1 and displays on the television monitor 57, a shot or photographed image or picture such as shown on a screen (1) based on an image-sensed signal Sv-1 selected by a signal switcher 42-1 of the terminal 40-1.

The controller 52 of the center device 50 confirms that the terminal 40-1 is line-connected through the B channel in response to the connection information signal TN. Further, the controller 52 reads the character signal CS for displaying that the line-connected terminal is the terminal 40-1, from the memory 53 and supplies it to the display controller 56. Therefore, a display area AR of the screen (1) indicates that the displayed shot picture corresponds to the shot picture of the terminal 40-1.

When, for example, the terminal 40-2 detects an abnormal state based on sensor signals Sa-2l through Sa-2p outputted from sensors 46-21 through 46-2p, a communication controller 45-2 sends a connection request signal SUC for calling the center device 50 to the ISDN 70.

The communication controller 51 of the center device 50 generates a response signal CNR-2 for establishing a packet connection through a D channel in response to the connection request signal SUC outputted from the terminal 40-2 and sends it to the ISDN 70. Further, the communication controller 51 produces a connection information signal TN for indicating that the connection request signal SUC outputted from the terminal 40-2 has been sent to the ISDN 70 and outputs it to the controller 52.

A communication controller 45-2 of the terminal 40-2 transmits an abnormal state discrimination signal DR-2 to the center device 50 through the D channel in response to the response signal CNR-2 sent from the center device 50.

The controller 52 of the center device 50 reads a character signal CS for indicating that the abnormal state has been detected by the terminal 40-2, from the memory 53, based on the connection information signal TN outputted from the communication controller 51 and the abnormal state discrimination signal DR-2 supplied from the terminal 40-2, and outputs it to the display controller 56. Therefore, since the display of the terminal 40-2 in which an abnormal state has occurred, and the display of the contents of the abnormal state are made within an area AL of a screen (2), the user is able to easily confirm what abnormal state has occurred in any terminal. Incidentally, if, for example, map information or the like indicative of the position of each terminal is stored in the memory 53 and the position of a terminal that has detected an abnormal state, is displayed on the screen of the television monitor 57, then the user can easily confirm a position where its abnormal state has occurred.

When the operation input part 54 supplies a trigger signal TR to the controller 52 according to the operation of the operation input part 54 by the user, the controller 52 generates a control signal CH, based on the trigger signal TR and supplies it to the communication controller 51.

The communication controller 51 generates a cut-off signal CC-1, based on the control signal CH and sends it to the D channel of the ISDN 70. Thus, the line connection with the terminal 40-1 through the B channel is terminated. Next, the communication controller 51 sends a connection request signal SUR-2 for calling the terminal 40-2 through the D channel of the ISDN 70.

The communication controller 45-2 of the terminal 40-2 generates a response signal CNC-2 for allowing the line connection of the B channel, in response to the connection request signal SUR-2 and sends it to the D channel. Here, the terminal 40-2 and the center device 50 are line-connected to each other through the B channel of the ISDN 70 so that line switching from the terminal 40-1 to the terminal 40-2 is done. Incidentally, the communication controller 51 of the center device 50 supplies a connection information signal TN indicative of the line connection to the terminal 40-2 through the B channel to the controller 52.

When the terminal 40-2 and the center device 50 are line-connected to each other through the B channel, the communication controller 45-2 of the terminal 40-2 transmits an information signal DS-2 to the center device 50 through the B channel. The center device 50 electrically processes the supplied information signal DS-2 and displays on the television monitor 57, such a shot or photographed picture as shown on a screen (3) based on an image-sensed signal Sv-2 selected by the signal switcher 42-2 of the terminal 40-2.

Further, the controller 52 of the center device 50 reads a character signal CS for indicating that the line-connected terminal corresponds to the terminal 40-2 and the contents of its abnormal state, from the memory 53, based on the connection information signal TN outputted from the communication controller 51 and the abnormal state discrimination signal DR-2 supplied from the terminal 40-2, and supplies it to the display controller 56. Therefore, the terminal 40-2 corresponding to the connected terminal and the contents of its abnormal state are displayed in an area AR of a screen (3).

Incidentally, the line switching is not necessarily limited to the case in which it is done under the operation of the operation input part 54 by the user. When a request for a line connection is made from another terminal, based on the connection information signal TN supplied to the controller 52 or when an abnormal state discrimination signal DR is supplied to the controller 52, the line switching may be done by supplying the control signal CH from the controller 52 to the communication controller 51.

When the terminal 40-1 and the center device 50 are in a state of being line-disconnected through the B channel and the connection request signal SUC for calling the center device 50 is sent from the communication controller 45-2 of the terminal 40-2, the communication controller 51 of the center device 50 outputs a response signal for permitting the line connection of the B channel in response to the connection request signal SUC outputted from the terminal 40-2. As a result, the terminal 40-2 and the center device 50 are line-connected to each other through the B channel.

When the terminal 40-2 and the center device 50 are line-connected to each other through the B channel of the ISDN 70, an information signal DS-2 is transmitted from the communication controller 45-2 of the terminal 40-2 to the center device 50 through the B channel and an abnormal state discrimination signal DR-2 is transmitted from the terminal 40-2 to the center device 50 through the D channel.

The communication controller 51 of the center device 50 supplies a connection information signal TN indicative of the execution of a line connection to the terminal 40-2 through the B channel, and the abnormal state discrimination signal DR-2 outputted from the terminal 40-2 to the controller 52. The controller 52 reads a character signal CS for displaying the line-connected terminal being the terminal 40-2 and the contents of its abnormal state, from the memory 53, based on the connection information signal TN and the abnormal state discrimination signal DR-2, and supplies it to the controller 56. Therefore, a shot or photographed picture shown on the screen (3) in Fig. 4 is displayed on the television monitor 57 based on the information signal DS-2 outputted from the terminal 40-2. The line-connected terminal used as the terminal 40-2 and the contents of the abnormal state are displayed in the area AR.

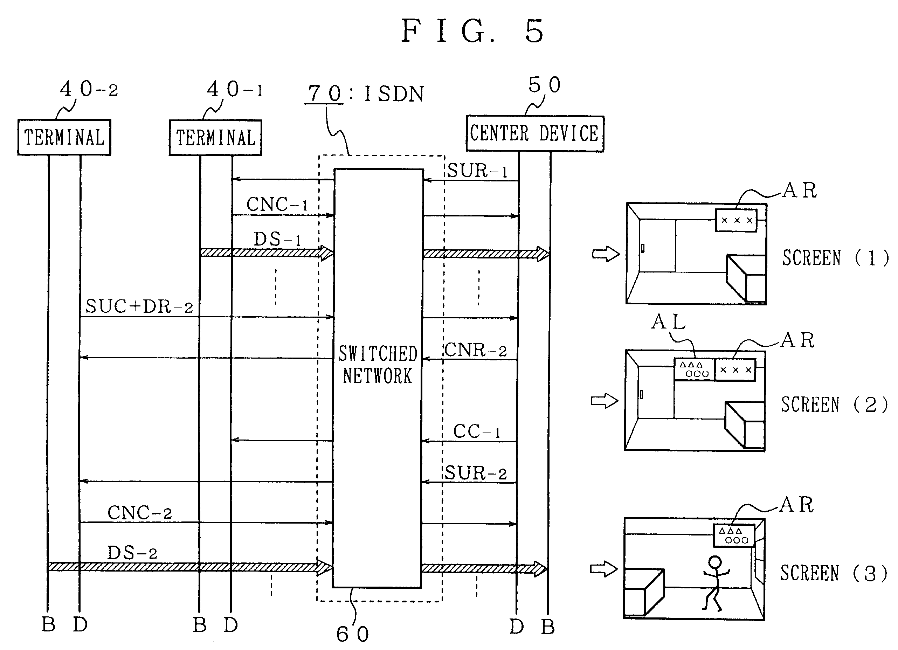

Meanwhile, the abnormal state discrimination signal DR-2 is transmitted after the establishment of the connection upon packet switching through the D channel upon the operation shown in Fig. 4. However, the connection request signal SUC-2 and the abnormal state discrimination signal DR-2 may be transmitted together before the establishment of the connection as shown in Fig. 5, for example. When, in this case, an abnormal state is detected in, for example, a terminal 40-2 based on sensor signals Sa-2l through Sa-2p outputted from sensors 46-2l through 46-2p, a communication controller 45-2 of the terminal 4-2 outputs a connection request signal SUC for calling a center device 50 and an abnormal state discrimination signal DR-2 together through a D channel of an ISDN 70 as shown in Fig. 5. Incidentally, parts in Fig. 5 corresponding to those shown in Fig. 4 are identified by the same reference numerals.

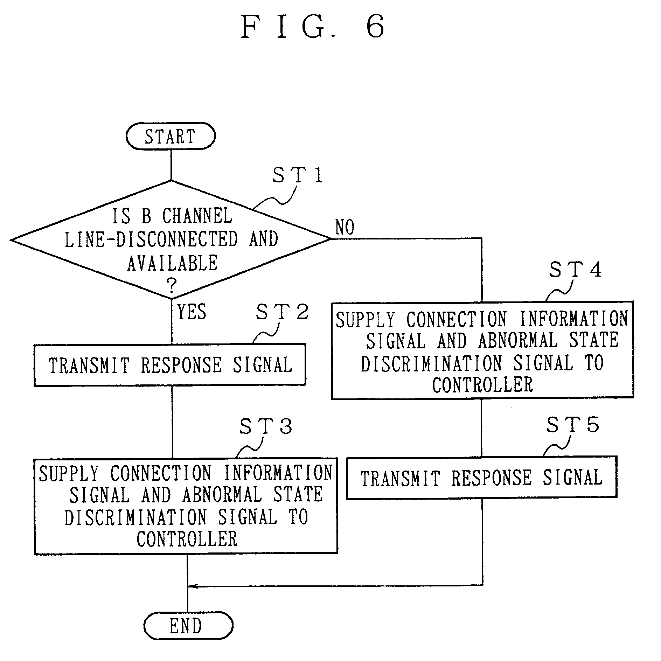

Now, a communication controller 51 of the center 50 performs a response process shown in Fig. 6 on the connection request signal SUC. When it is determined in Step ST1 of Fig. 6 that a B channel is placed in a line-disconnected state and is not busy or available, the communication controller 51 proceeds to Step ST2. When the B channel is line-connected to another terminal, the communication controller 51 proceeds to Step ST4. In the Step ST2, the communication controller 51 sends a response signal for allowing the B channel to be line-connected in response to the connection request signal SUC outputted from the terminal 40-2. As a result, the terminal 40-2 which has sent the connection request signal SUC, and the center device 50 are line-connected to each other through the B channel. Next, the communication controller 51 proceeds to Step ST3 where a connection information signal TN indicative of the line connection with the terminal 40-2 and the abnormal state discrimination signal DR-2 outputted from the terminal 40-2 are supplied to the controller 52, and thereafter the response process with respect to the connection request signal SUC is terminated.

When the B channel is line-connected and the communication controller 51 proceeds from Step ST1 to Step ST4, the communication controller 51 supplies a connection information signal TN indicative of the sending of the connection request signal SUC from the terminal 40-2 and an abnormal state discrimination signal DR-2 outputted from the terminal 40-2 to the controller 52 in Step ST4. Next, in Step ST5, the communication controller 51 outputs a response signal indicative of the B channel being in line connection and terminates the response process with respect to the connection request signal SUC.

Even when the connection request signal SUC-2 and the abnormal state discrimination signal DR-2 are transmitted together, the controller 52, image expander 55 and display controller 56 or the like of the center device 50 perform operation in the same manner as the case in which the abnormal state discrimination signal DR-2 is transmitted after the establishment of connection upon packet switching through a D channel.

According to the aforementioned embodiment as described above, when the occurrence of the abnormal state is detected by any of a plurality of terminals, the connection request signal and the abnormal state discrimination signal are supplied to the center device 50, where the information about the terminal having detected the occurrence of the abnormal state and the contents of its abnormal state are displayed on the television monitor 57. Therefore, the user can reliably detect the occurrence of the abnormal state from a place distant therefrom even in the case of one center device. Further, a communication network or line is easily switched automatically or by the operation of an operation input part so that a shot or photographed picture of the terminal having detected the abnormal state can be displayed on the screen of the television monitor 57. Therefore, the user can easily confirm the state and cause of the abnormal state.

Further, since abnormal states detected by a plurality of terminals can be confirmed by one center device with ease and efficiency, an information communication device or system can be constructed at a low price and the operational cost can be also cut down. Moreover, since the number of users can be reduced, labor costs or the like can be also lowered.

When the occurrence of abnormal states are detected by the plurality of terminals, information about the plurality of terminals having detected the occurrence of the abnormal states is displayed on the screen of the television monitor 57 and the contents of the abnormal states detected by the respective terminals are displayed thereon. In this condition, the user may operate the operation input part 54 so that a short or photographed picture from any terminal is displayed on the television monitor 57 of the center device 50.

Since the information signal is supplied to the center device 50 through the B channel of the ISDN 70, and the abnormal state discrimination signal is supplied to the center device 50 through the D channel thereof, the abnormal state discrimination signal is supplied to the center device 50 without being affected by the information signal. Therefore, the information about the terminals having detected the occurrence of the abnormal states and the contents of their abnormal states can be displayed together on the screen of the television monitor 57 while the shot images or pictures at the terminals are being continuously displayed thereon.

A communication line may be any one if capable of transmitting an information signal by means of line switching and sending a connection request signal and an abnormal state discrimination signal by means of packet switching. The communication line is not necessarily limited to the ISDN comprised of the two B channels and one D channel.

If one is used wherein an information signal is generated even using information such as voice or the like corresponding to the image-sensed signal Sv-k selected by the terminal 40-k as well as the information based on the selected image-sensed signal Sv-k, and the generated information signal is transmitted, the state of an abnormal state can be confirmed even by voice as well as by the image.

Further, the aforementioned embodiment has described the information communication system capable of confirming the photographed image at each terminal by the center device when the abnormal state is detected by the terminal. However, even when a plurality of telephones are connected through a communication line, a connection request signal having information about each telephone for sending an information signal is transmitted upon transmission of the information signal, and a process for receiving the information signal is controlled by utilizing this connection request signal, whereby the information signal can be processed through the execution of communications at low cost and with efficiency.

### INDUSTRIAL APPLICABILITY

As described above, the information communication system and the communication control device according to the present invention are useful for the purpose of connecting a center device and a plurality of terminals through a communication line to transfer information signals therebetween, and particularly suitable for use in monitoring using the plurality of terminals by the center device.

## Claims

1. An information communication system comprising:
a plurality of terminals; and
a center device;
said information communication system performing communications at to information signals between said plurality of terminals and said center device through a communication line having a first channel and a second channel;
said terminals each including,
information signal generating means for generating said each information signal;
connection request signal generating means for generating a signal for making a request for connection to said center device;
signal transmitting means capable of transmitting the information signal through said first channel and transmitting the connection request signal through said second channel;
said center device including,
receiving means for receiving therein the information signal transmitted via said first channel from said signal transmitting means in one of said plurality of terminals and the connection request signal transmitted via said second channel from said signal transmitting means in said one of said plurality of terminals;
first monitor information generating means for generating first monitor information confirmable by a user, based on the information signal being now received by said receiving means through said first channel;
second monitor information generating means for generating second monitor information indicative of a terminal having transmitted the connection request signal and confirmable by the user, according to the connection request signal received by said receiving means through said second channel;
information output means for outputting the first monitor information and the second monitor information;
switching control signal generating means for generating a switching control signal for switching a terminal connected via said first channel to another terminal; and
switching control signal transmitting means for transmitting the switching control signal through said second channel.

2. The information communication system according to claim 1, wherein said switching control signal generating means generates, as the switching control signal, each of both a cutoff signal for cutting off a connection to the terminal being now connected via said first channel and a connection instruction signal for providing instructions for a connection to the terminal corresponding to the connection request signal received by said receiving means.

3. The information communication system according to claim 1, wherein said each information signal is a video signal.

4. The information communication system according to claim 3, wherein said information output means combines a video signal corresponding to said first monitor information and a character signal corresponding to said second monitor information and outputs the result of combination therefrom.

5. The information communication system according to claim 4, further comprising display means for displaying an image based on the signal outputted from said information output means.

6. The information communication system according to claim 1, wherein said switching control signal generating means automatically generates a switching control signal according to the connection request signal.

7. The information communication system according to claim 1, further comprising trigger signal generating means for generating a trigger signal according to a user's operation, and
wherein said switching control signal generating means generates a switching control signal corresponding to the terminal having transmitted said connection request signal when the trigger signal is supplied thereto.

8. The information communication system according to claim 1, wherein said first channel is a line whose connected state is controlled by line switching and said second channel is a line through which information is transmitted by a packet.

9. The information communication system according to claim 8, wherein said first channel is a B channel of an ISDN line and said second channel is a D channel of the ISDN line.

10. The information communication system according to claim 2, wherein said switching control signal generating means detects whether said first channel is being used when the connection request signal is received by said receiving means and automatically generates a switching control signal indicative of a connection to the terminal corresponding to the connection request signal through said first channel when said first channel is being unused.

11. The information communication system according to claim 1, wherein said each terminal further includes abnormal state detecting means for detecting an abnormal state and said connection request signal generating means generates the connection request signal when said abnormal state detecting means detects the abnormal state.

12. The information communication system according to claim 1, wherein said information signal generating means includes a plurality of video cameras for generating video signals used as the information signals and selecting means for selectively outputting a video signal generated by at least one video camera, of the video signals generated by said plurality of video cameras.

13. A communication control device which is connected to one of a plurality of terminals through a communication line having a first channel and a second channel and performs communications as to information signals with the connected terminal, comprising:
receiving means for receiving the information signal sent through said first channel from one of said plurality of terminals and receiving the connection request signal sent through said second channel from one of said plurality of terminals;
first monitor information generating means for generating first monitor information confirmable by a user, based on an information signal being now received by said receiving means through said first channel;
second monitor information generating means for generating second monitor information indicative of a terminal having transmitted the connection request signal and confirmable by the user, according to the connection request signal received by said receiving means through said second channel;
information output means for outputting the first monitor information and the second monitor information;
switching control signal generating means for generating a switching control signal for switching a terminal connected via said first channel to another terminal; and
switching control signal transmitting means for transmitting the switching control signal through said second channel.

14. The communication control device according to claim 13, wherein said switching control signal generating means generates, as the switching control signal, each of both a cutoff signal for cutting off a connection to the terminal being now connected via said first channel and a connection instruction signal for providing instructions for a connection to a terminal corresponding to the connection request signal received by said receiving means.

15. The communication control device according to claim 13, wherein said each information signal is a video signal.

16. The communication control device according to claim 15, wherein said information output means combines a video signal corresponding to said first monitor information and a character signal corresponding to said second monitor information and outputs the result of combination therefrom.

17. The communication control device according to claim 16, comprising display means for displaying an image based on the signal outputted from said information output means.

18. The communication control device according to claim 13, wherein said switching control signal generating means automatically generates a switching control signal according to the connection request signal.

19. The communication control device according to claim 13, comprising trigger signal generating means for generating a trigger signal according to a user's operation, and
wherein said switching control signal generating means generates a switching control signal for providing instructions for a connection to the terminal having transmitted said connection request signal when the trigger signal is supplied thereto.

20. The communication control device according to claim 14, wherein said switching control signal generating means detects whether said first channel is being used when the connection request signal is received by said receiving means and automatically generates a switching control signal indicative of a connection to the terminal corresponding to the connection request signal through said first channel when said first channel is being unused.
